# EUROPÄISCHE PATENTSCHRIFT

(11) **EP 3 615 366 B1**
(45) Veröffentlichungstag und Bekanntmachung des Hinweises auf die Patenterteilung: **19.10.2022**
(21) Anmeldenummer: 18702165.4
(22) Anmeldetag: 22.01.2018
(51) Int. Cl.: B60K 6/36, B60K 6/365, B60K 6/48, B60K 6/547, F16H 3/00, F16H 37/04

(54) **HYBRIDANTRIEBSSTRANG FÜR EIN KRAFTFAHRZEUG**
HYBRID POWERTRAIN FOR A MOTOR VEHICLE
CHAÎNE CINÉMATIQUE HYBRIDE POUR UN VÉHICULE AUTOMOBILE

(30) Priorität: 28.04.2017 DE 102017109268
(43) Veröffentlichungstag der Anmeldung: 04.03.2020
(73) Patentinhaber: Magna PT B.V. & Co. KG, 74199 Untergruppenbach (DE)
(72) Erfinder: KAZMAIER, Stefanie, 71720 Oberstenfeld (DE)
(74) Vertreter: Rausch, Gabriele
(86) Internationale Anmeldenummer: PCT/EP2018/051398
(87) Internationale Veröffentlichungsnummer: WO 2018/197055

(56) Entgegenhaltungen:
- EP-A1- 3 095 631
- DE-A1- 10 260 179
- JP-A- 2010 144 775

## Beschreibung

Die vorliegende Erfindung betrifft einen Hybridantriebsstrang gemäß dem Oberbegriff von Anspruch 1.

Aus dem Dokument DE 10 2015 201 716 A1 ist ein Doppelkupplungsgetriebe mit zwei Teilgetrieben bekannt, die jeweils eine Getriebeeingangswelle, eine Getriebeausgangswelle und zumindest einen zwischen diesen schaltbaren Gang beinhalten. Die Getriebeausgangswellen sind über ein Differentialgetriebe mit einer Abtriebswelle verbunden. Das Differentialgetriebe ist aus einem mittels einer dritten Reibungskupplung schaltbaren Planetengetriebe gebildet. Die Abtriebswelle des Differentialgetriebes ist folglich zugleich Getriebeausgangswelle. Immer zwei der drei Reibungskupplungen sind geschlossen. Eine Überschneidungsschaltung zum Wechsel von Gangstufen unter Last findet immer zwischen einer der beiden Reibungskupplungen an den Getriebeeingangswellen und der dritten Reibungskupplung an dem Differentialgetriebe statt.

Aus dem Dokument DE 10 2015 008 068 A1 ist ein weiteres Doppelkupplungsgetriebe bekannt, bei dem eine Ausgangswellenanordnung zwei Ausgangswellen aufweist, die jeweils parallel versetzt zu einer Eingangswellenanordnung ausgerichtet sind. Die Eingangswellenanordnung und die Ausgangswellenanordnung sind über eine Mehrzahl von Radsätzen miteinander verbunden, die in jeweiligen Zahnradebenen angeordnet sind. In zumindest einer der Zahnradebenen ist zur Bereitstellung von zumindest einem Rückwärtsgetriebegang zumindest ein Planetenradgetriebe vorgesehen. Ein Hohlrad des Planetenradsatzes ist mit einem Losrad verbunden. Ein Sonnenrad ist mit einem anderen Losrad verbunden. Ein Planetenträger ist mit einer der Ausgangswellen verbindbar.

Aus dem Dokument EP 2 016 305 B1 ist ein Doppelkupplungsgetriebe bekannt, mit einem ersten und einem zweiten Teilgetriebe, deren Ausgänge mit unterschiedlichen Gliedern eines Planetenradsatzes verbunden sind. Ein Elektromotor ist selektiv antriebstechnisch mit einem weiteren Glied des Planetenradsatzes gekoppelt.

Ferner ist aus dem Dokument DE 10 2013 215 114 A1 ein Hybridantrieb eines Kraftfahrzeuges bekannt, bei dem ein Verbrennungsmotor über eine Einzelkupplung mit einer Getriebeeingangswelle eines Stufengetriebes gekoppelt ist. Das Getriebe weist eine Ausgangswelle auf, an der eine Mehrzahl von Schaltkupplungen zum Schalten von Gangstufen gelagert ist. An der Ausgangswelle ist eine Hohlwelle gelagert. Die Ausgangswelle ist mit einem Planetenträger eines Planetenradsatzes verbunden. Die Hohlwelle ist mit einem Sonnenrad des Planetenradsatzes verbunden. Ein Hohlrad des Planetenradsatzes ist über eine Schaltkupplung mit dem Sonnenrad verbindbar. Alternativ hierzu ist das Sonnenrad mit einem Gehäuse des Getriebes verbindbar, oder mit einem Gangradsatz des Getriebes. Eine elektrische Maschine ist an das Hohlrad des Planetenradsatzes angebunden.

Das Dokument DE 10 2010 063 092 A1 zeigt einen weiteren Hybridantrieb, bei dem ein Verbrennungsmotor über eine erste Anzahl von Radsätzen mit einem Abtrieb verbindbar ist und bei dem eine elektrische Maschine über eine zweite Anzahl von Radsätzen mit dem Abtrieb verbindbar ist.

Das Dokument DE 10 2013 206 176 A1 offenbart einen Fahrzeugantrieb mit einem Verbrennungsmotor, der über eine Einzelkupplung mit einer Getriebeeingangswelle verbunden ist, die über eine erste Kupplung mit einer elektrischen Maschine verbunden ist. Die elektrische Maschine ist ferner über eine zweite Kupplung mit einer Ausgangswelle verbunden.

Weitere Hybridantriebsstränge sind bekannt aus den Dokumenten WO 2015/197927 A1 und DE 10 2013 022 142 A1.

Aus der DE 102 60 179 A1 ist ein Mehrganggetriebe als Doppelkupplungsgetriebe bekannt, das koaxial zu einer ersten Ausgangswelle ein Planetenradsatz mit drei Gliedern Sonnenrad, Steg, Hohlrad angeordnet ist.

Aus der JP 2010 144775 A ist ebenfalls ein Doppelkupplungsgetriebe mit Planetenradsatz bekannt.

Vor diesem Hintergrund ist es eine Aufgabe der Erfindung, einen verbesserten Hybridantriebsstrang anzugeben.

Die obige Aufgabe wird bei dem eingangs genannten Hybridantriebsstrang gemäß der Erfindung durch die Merkmale des kennzeichnenden Teils von Anspruch 1 gelöst.

Bei dem erfindungsgemäßen Hybridantriebsstrang ist die Ausgangswellenanordnung vorzugsweise über ein mechanisches Differentialgetriebe mit angetriebenen Rädern des Kraftfahrzeuges verbunden.

Über die Konstruktion, an einer Ausgangswelle (der ersten Ausgangswelle) eine Koppelhohlwelle zu lagern, ist es möglich, die erste Eingangswelle und die zweite Eingangswelle der Eingangswellenanordnung konstruktiv auf günstige Art und Weise nach der Art eines Konstanten-Radsatzes mit einem jeweiligen Glied des Planetenradsatzes zu verbinden. Da die Eingangswellenanordnung ferner über eine Mehrzahl von schaltbaren Radsätzen mit einer Ausgangswellenanordnung verbindbar ist, kann ein Leistungsfluss alternativ über den Planetenradsatz oder über einen der schaltbaren Radsätze hin zu einem Abtrieb der Getriebeanordnung geführt werden.

Je nach Ausgestaltung ist es dabei in einigen Ausführungsformen möglich, einen oder mehrere Gangwechsel unter Last durchzuführen, insbesondere Gangwechsel zwischen den schaltbaren Radsätzen.

Wenigstens einer der schaltbaren Radsätze ist dabei zur Verbindung der ersten Eingangswelle mit der Ausgangswellenanordnung ausgelegt, und wenigstens ein weiterer der schaltbaren Radsätze ist dabei zur Verbindung der zweiten Eingangswelle mit der Ausgangswellenanordnung ausgelegt.

Unter einer Verbindung ist vorliegend generell zu verstehen, dass die zwei miteinander verbundenen Glieder zwangsweise drehgekoppelt sind, sofern nichts anderes erwähnt ist. Vorzugsweise weist die Ausgangswellenanordnung die erste Ausgangswelle und eine parallel hierzu versetzt angeordnete zweite Ausgangswelle auf. Die erste und die zweite Ausgangswelle sind vorzugsweise parallel versetzt zu der Eingangswellenanordnung angeordnet. Die erste Ausgangswelle und die zweite Ausgangswelle sind in diesem Fall vorzugsweise ferner über einen Abtriebsradsatz mit einem Abtrieb der Getriebeanordnung verbunden. Vorzugsweise ist zu diesem Zweck an der ersten Ausgangswelle ein erstes Abtriebsrad festgelegt, und an der zweiten Ausgangswelle ist vorzugsweise ein zweites Abtriebsrad festgelegt, die jeweils mit einem Eingangsglied eines Abtriebs verbunden sind, insbesondere mit einem Eingangsglied eines mechanischen Differentialgetriebes.

Die erste und die zweite Reibkupplung sind vorzugsweise nach der Art von Lastschaltkupplungen ausgebildet, also beispielsweise durch nass laufende Lamellenkupplungen, die entweder geöffnet sind oder reibschlüssig miteinander verbunden sind. Die erste und die zweite Reibkupplung können zwischen ihrem Eingangsglied und dem jeweiligen Ausgangsglied vorzugsweise keinen Formschluss in Drehrichtung herstellen.

Die Mehrzahl von schaltbaren Radsätzen sind vorliegend vorzugsweise zwischen der Eingangswellenanordnung und der zweiten Ausgangswelle angeordnet.

Der Planetenradsatz weist vorzugsweise genau drei Glieder auf, kann jedoch auch vier Glieder aufweisen.

Das erste Glied des Planetenradsatzes ist vorzugsweise ein Sonnenrad. Das zweite Glied des Planetenradsatzes ist vorzugsweise ein Hohlrad.

Mit dem Hybridantriebsstrang ist vorzugsweise eine Mehrzahl von verbrennungsmotorischen Gangstufen einrichtbar, vorzugsweise vier verbrennungsmotorische Gangstufen oder mehr. Vorzugsweise beträgt die Anzahl der verbrennungsmotorischen Gangstufen genau vier oder fünf.

Ferner ist der Hybridantriebsstrang vorzugsweise dazu in der Lage, wenigstens zwei elektromotorische Gangstufen einzurichten, vorzugsweise genau zwei oder drei elektromotorische Gangstufen.

Eine Rückwärtsgangstufe, die separat von den genannten elektromotorischen und verbrennungsmotorischen Gangstufen ausgebildet ist, kann entweder ausschließlich als elektrische Gangstufe einrichtbar sein, wozu die Drehrichtung der elektrischen Maschine umgekehrt wird. Alternativ ist es möglich, einen schaltbaren Radsatz speziell für die Rückwärtsgangstufe vorzusehen, so dass auch ein verbrennungsmotorischer Rückwärtsfahrbetrieb möglich ist.

Generell ist wenigstens für einige der verbrennungsmotorischen Vorwärtsgangstufen auch ein Hybrid-Modus einrichtbar, so dass beispielsweise ein Boost-Betrieb möglich ist. Ferner ist in vielen Fällen ein Rekuperationsmodus möglich, bei dem während der Fahrt die elektrische Maschine als Generator betrieben wird, um eine daran angeschlossene Batterie zu speisen.

Die elektrische Maschine kann mit der Koppelhohlwelle entweder verbunden sein, also drehfest gekoppelt sein, so dass die elektrische Maschine mit dem ersten Glied des Planetenradsatzes verbunden ist. Alternativ hierzu kann die elektrische Maschine auch mit einem anderen Glied des Planetenradsatzes verbunden sein. In letzterem Fall ist die elektrische Maschine beispielsweise indirekt über eine erste Schaltkupplung mit der Koppelhohlwelle verbindbar.

In anderen Ausführungsformen kann die elektrische Maschine über eine Maschinenkupplung mit einem Glied des Planetenradsatzes verbunden sein. Bevorzugt ist es jedoch, wenn die Verbindung zwischen der elektrischen Maschine und dem Glied des Planetenradsatzes eine nicht-schaltbare Verbindung ist.

Vorzugsweise ist an der zweiten Ausgangswelle ein Parksperrenrad festgelegt, um ein Kraftfahrzeug immobilisieren zu können.

Generell ist auch ein Starten des Verbrennungsmotors mittels der elektrischen Maschine möglich.

Bevorzugt ist es, wenn ein drittes Glied des Planetenradsatzes mit der Ausgangswellenanordnung verbunden ist. Da der Planetenradsatz vorzugsweise koaxial zu der ersten Ausgangswelle angeordnet ist, ist eine derartige Verbindung konstruktiv einfach realisierbar.

Mit dem erfindungsgemäßen Hybridantriebsstrang ist es möglich, wenigstens eine Gangstufe einzurichten, indem die erste und die zweite Reibkupplung gleichzeitig geschlossen werden. In diesem Fall sind die schaltbaren Radsätze vorzugsweise nicht geschaltet, und, da die mit den Ausgangsgliedern der Reibkupplungen verbundenen Glieder des Planetenradsatzes auf diese Art und Weise miteinander verblockt sind, kann Leistung direkt auf ein drittes Glied des Planetenradsatzes übertragen werden.

In einem nicht beanspruchten, geeigneten Verfahren zum Ansteuern des erfindungsgemäßen Hybridantriebsstranges erfolgt ein Gangwechsel unter Last, indem die erste und die zweite Reibkupplung überschneidend betätigt werden, während das erste und das zweite Glied des Planetenradsatzes miteinander verbunden bleiben.

Das erste und das zweite Glied des Planetenradsatzes bleiben dabei vorzugsweise über eine erste Schaltkupplung formschlüssig miteinander verbunden.

Hierdurch kann ein Gangwechsel unter Last, d.h. im Wesentlichen zugkraftunterbrechungsfrei und ohne Schaltruck durchgeführt werden. Die überschneidende Betätigung der ersten und der zweiten Reibkupplung erfolgt in diesem Fall so, dass die eine Kupplung hiervon geöffnet und die andere Kupplung geschlossen wird.

Die erste Schaltkupplung ist vorzugsweise eine formschlüssige Schaltkupplung. Die erste Schaltkupplung, wie auch weitere nachstehend noch erörterte Schaltkupplungen, sind vorzugsweise als Synchron-Schaltkupplungen realisiert.

Durch die Verbindbarkeit des ersten und des zweiten Gliedes kann der Planetenradsatz quasi als feste Übersetzung wirken, wobei Leistung entweder über die erste Reibkupplung oder über die zweite Reibkupplung auf dem Planetenradsatz übertragen wird, und von diesem über die feste Übersetzung auf die Ausgangswellenanordnung übertragen werden kann.

Ferner ist es insgesamt vorteilhaft, wenn die elektrische Maschine mit dem ersten Glied des Planetenradsatzes verbunden ist oder wenn die elektrische Maschine mit dem zweiten Glied des Planetenradsatzes verbunden ist oder wenn die elektrische Maschine mit einem Koppelradsatz verbunden ist, mittels dessen die zweite Eingangswelle mit der Koppelhohlwelle verbindbar ist.

Vorzugsweise ist die elektrische Maschine auf diese Art und Weise mit einem der Glieder des Planetenradsatzes verbunden, das nicht mit der Ausgangswellenanordnung verbunden ist.

Ferner ist es insgesamt vorteilhaft, wenn die erste Eingangswelle mittels eines ersten schaltbaren Radsatzes mit der zweiten Ausgangswelle der Ausgangswellenanordnung verbunden ist.

Hierdurch kann Leistung unmittelbar von der ersten Eingangswelle auf die Ausgangswellenanordnung übertragen werden, ohne dass Leistung über den Planetenradsatz fließen muss. Ferner ist es möglich, über die erste Eingangswelle entweder verbrennungsmotorische Leistung zuzuführen, oder auch, je nach Anbindung der elektrischen Maschine, elektromotorische Antriebsleistung.

Gemäß einer weiteren bevorzugten Ausführungsform ist die zweite Eingangswelle mittels eines zweiten schaltbaren Radsatzes mit einer zweiten Ausgangswelle der Ausgangswellenanordnung verbindbar.

Der erste und der zweite schaltbare Radsatz können dabei mittels unabhängig voneinander schaltbarer Schaltkupplungen in den Leistungsfluss schaltbar sein.

Von besonderem Vorzug ist es jedoch, wenn zwischen dem ersten schaltbaren Radsatz und dem zweiten schaltbaren Radsatz ein Schaltkupplungspaket angeordnet ist, mittels dessen alternativ der erste schaltbare Radsatz oder der zweite schaltbare Radsatz in den Leistungsfluss schaltbar ist.

Bei unabhängig voneinander schaltbaren Kupplungen ist ggf. eine Lastschaltung ohne Zugkraftunterbrechung zwischen den schaltbaren Radsätzen möglich.

Bei der Ausgestaltung eines Schaltkupplungspaketes, das mittels eines einzelnen Aktuators betätigbar ist, sind die Radsätze nur alternativ in den Leistungsfluss schaltbar, so dass ein Gangwechsel zwischen dem ersten und dem zweiten schaltbaren Radsatz nur mit Zugkraftunterbrechung möglich ist.

Gemäß der Erfindung ist vorgesehen, dass die zweite Eingangswelle über einen Koppelradsatz mit der Koppelhohlwelle verbindbar ist, wobei der Koppelradsatz in axialer Richtung zwischen der ersten Schaltkupplung und dem Planetenradsatz angeordnet ist.

Ein koaxial zu der ersten Ausgangswelle vorgesehenes Rad des Koppelradsatzes ist folglich in axialer Richtung unmittelbar zwischen der ersten Schaltkupplung und dem Planetenradsatz angeordnet.

Ferner ist es vorteilhaft, wenn die zweite Eingangswelle über einen Koppelradsatz mit dem zweiten Glied des Planetenradsatzes verbunden ist.

Hierbei kann Antriebsleistung, die der zweiten Eingangswelle zugeführt wird, unmittelbar in das zweite Glied des Planetenradsatzes eingeleitet werden.

In den Ausführungsformen mit Koppelradsatz ist ein Losrad des Koppelradsatzes vorzugsweise in axialer Richtung benachbart zu dem Planetenradsatz angeordnet.

Zudem ist das Losrad des Koppelradsatzes vorzugsweise mit dem zweiten Glied des Planetenradsatzes drehverbunden.

Ferner kann das Losrad des Koppelradsatzes vorzugsweise mittels einer formschlüssigen Schaltkupplung mit der Koppelhohlwelle verbunden werden, um eine Koppelung beider Eingangswellen einzustellen bzw. um eine Verbindung des ersten und zweiten Glieds des Planetenradsatzes einzurichten.

Auf diese Art und Weise kann die Verbindung zwischen dem Koppelradsatz und dem Glied des Planetenradsatzes konstruktiv einfach erfolgen.

Mit dem erfindungsgemäßen Hybridantriebsstrang, sind, je nach Ausführungsform, unterschiedliche Vorteile realisierbar, von denen nachfolgend einige aufgelistet sind.

Zum einen ist in vielen Fällen ein elektromotorischer Fahrbetrieb wenigstens mittels zwei Gangstufen möglich, zum einen mittels eines schaltbaren Radsatzes (erste elektromotorische Gangstufe) und mittels des geschalteten Planetenradsatzes (bei geschlossener erster formschlüssiger Schaltkupplung).

Ferner sind, je nach Ausführungsform wenigstens vier verbrennungsmotorische Vorwärtsgangstufen einrichtbar, von denen vorzugsweise zwei durch schaltbare Radsätze realisierbar sind, und von denen vorzugsweise zwei weitere bei geschlossener erster Schaltkupplung dadurch realisierbar sind, dass Leistung über den Planetenradsatz übertragen wird.

Der erfindungsgemäße Hybridantriebsstrang ist vorzugsweise mittels genau drei Schaltkupplungen realisierbar, von denen zwei Schaltkupplungen vorzugsweise in ein Schaltkupplungspaket integrierbar sind, so dass eine einfache Betätigung mittels nur zwei Aktuatoren realisierbar ist. Generell sind alle grundsätzlichen Hybrid-Funktionen realisierbar, einschließlich Rekuperieren, Boost-Betrieb, etc. Die Anbindung der elektrischen Maschine kann entweder an die erste Eingangswelle erfolgen, oder an die zweite Eingangswelle.

Generell ist durch den Planetenradsatz eine modulare Drei- oder Viergangausführung für den verbrennungsmotorischen Betrieb realisierbar, und eine Ausführung für den elektromotorischen Betrieb mit einer Gangstufe oder mit zwei Gangstufen, je nach Betriebsstrategie und Ausgestaltung.

Der Hybrid-Antriebsstrang ist vorzugsweise nach dem Torque-Split-Prinzip aufgebaut.

Es zeigen.
Fig. 1 eine schematische Darstellung einer ersten Ausführungsform eines erfindungsgemäßen Hybridantriebsstranges;
Fig. 2 eine schematische Darstellung einer weiteren Ausführungsform eines erfindungsgemäßen Hybrid-Antriebsstranges;
Fig. 3 eine Schalttabelle mit möglichen Gangstufen des Hybridantriebsstranges der Fig. 2;
Fig. 4 eine Schalttabelle mit einer weiteren Möglichkeit der Realisierung von Gangstufen mittels des Hybridantriebsstranges der Fig. 2;
Fig. 5 eine Schalttabelle mit einer weiteren Möglichkeit der Realisierung von Gangstufen mittels des Hybridantriebsstranges der Fig. 2;
Fig. 6 eine schematische Darstellung eines nicht erfindungsgemäßen Hybridantriebsstranges;
Fig. 7 eine schematische Darstellung einer weiteren Ausführungsform eines erfindungsgemäßen Hybridantriebsstranges; und
Fig. 8 eine schematische Darstellung einer weiteren Ausführungsform eines erfindungsgemäßen Hybridantriebsstranges.

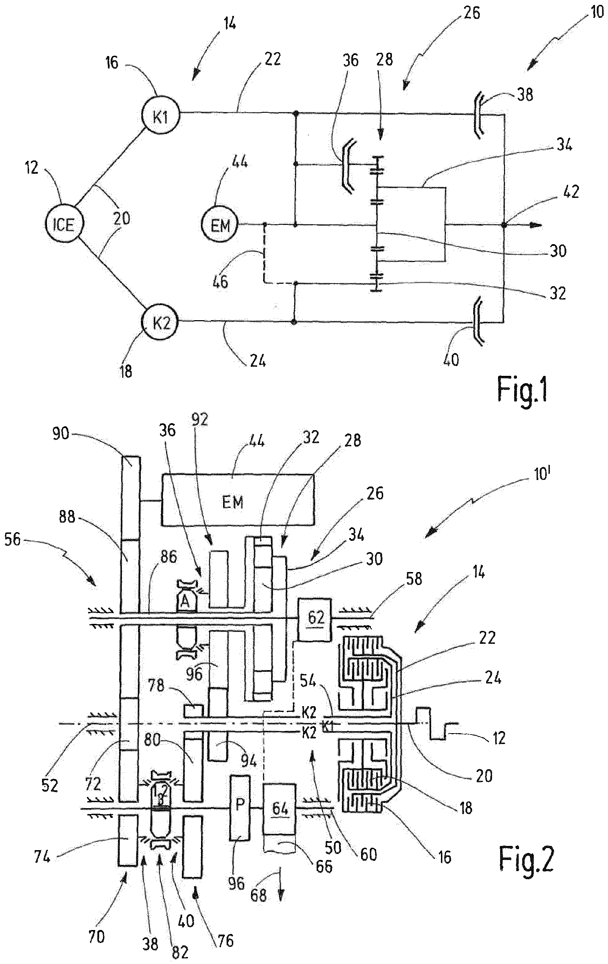

In Fig. 1 ist in schematischer Form ein Hybridantriebsstrang für ein Kraftfahrzeug dargestellt und generell mit 10 bezeichnet.

Der Hybridantriebsstrang 10 weist einen Verbrennungsmotor (ICE) 12 und eine Doppelkupplungsanordnung 14 auf. Doppelkupplungsanordnung 14 beinhaltet eine erste Reibkupplung 16 (K1) und eine zweite Reibkupplung 18 (K2). Die zwei Reibkupplungen 16, 18 weisen ein gemeinsames Eingangsglied 20 auf, das mit dem Verbrennungsmotor 12 verbunden ist (beispielsweise mit der Kurbelwelle).

Ferner weist die erste Reibkupplung 16 ein Ausgangsglied 22 auf. Die zweite Reibkupplung 18 weist ein Ausgangsglied 24 auf.

Der Hybridantriebsstrang 10 beinhaltet ferner eine Getriebeanordnung 26. Die Getriebeanordnung 26 weist einen Planetenradsatz 28 auf.

Der Planetenradsatz 28 beinhaltet ein erstes Glied 30 in Form eines Sonnenrades, ein zweites Glied 32 in Form eines Hohlrades und ein drittes Glied 34 in Form eines Planetenträgers, an dem eine Mehrzahl von Planeten drehbar gelagert ist, die sowohl mit dem Sonnenrad 30 als auch mit dem Hohlrad 32 in Eingriff stehen.

Wie es der schematischen Darstellung in Fig. 1 zu entnehmen ist, das erste Ausgangsglied 20 der ersten Reibkupplung 16 mit dem ersten Glied 30 (Sonnenrad) verbunden. Unter einer Verbindung wird vorliegend verstanden, dass die zwei betroffenen Glieder fest drehgekoppelt sind, derart, dass eine Drehung eines Gliedes zwangsweise eine Drehung des anderen Gliedes nach sich zieht, und umgekehrt.

In Fig. 1 ist ferner zu erkennen, dass das Ausgangsglied 24 der zweiten Reibkupplung 18 mit dem zweiten Glied 32 (Hohlrad) verbunden ist.

Das zweite Glied 32 und das erste Glied 30 sind ferner über eine erste Schaltkupplung 36 miteinander verbindbar.

Während die Reibkupplungen 16, 18 vorzugsweise so ausgebildet sind, dass sie entweder geöffnet oder in einen reibschlüssigen Zustand versetzt werden können, ist die erste Schaltkupplung 36 vorzugsweise als formschlüssige Kupplung bzw. Formschlusskupplung ausgebildet, bei der die Schaltkupplung entweder geöffnet ist oder die zwei miteinander zu verbindenden Glieder (hier das erste Glied 30 und das zweite Glied 32) in Drehrichtung formschlüssig miteinander verbinden kann.

Die Getriebeanordnung 26 ist ferner so aufgebaut, dass das Ausgangsglied 22 der ersten Kupplung 16 über eine zweite Schaltkupplung 38 mit einem Ausgang 42 der Getriebeanordnung 26 verbunden werden kann, und dass das Ausgangsglied 24 der zweiten Reibkupplung 18 über eine dritte Schaltkupplung 40 mit dem Ausgang 42 verbunden werden kann.

Die vorliegend gezeigten Verbindungen sind, wie gesagt, zwangsweise drehgekoppelte Verbindungen, die jedoch ggf. Übersetzungen beinhalten können, dahingehend, dass das eine Glied einer solchen Verbindung mit einer anderen Drehzahl dreht als das zweite Glied einer solchen Verbindung. In entsprechender Weise ist es möglich, dass die Verbindungen zwischen den Ausgangsgliedern 22, 24 und dem Ausgang 42 über die Schaltkupplungen 38, 40 jeweilige, vorzugsweise unterschiedliche Übersetzungen beinhalten können.

Die Schaltkupplungen 38, 40 sind zudem allgemein so zu verstehen, dass diese Schaltkupplungen jeweils ggf. auch durch mehrere parallele Schaltkupplungen gebildet sein können, die unterschiedliche Übersetzungen, beispielsweise zwischen dem ersten Ausgangsglied 22 und dem Ausgang 42 und/oder zwischen dem zweiten Ausgangsglied 24 und dem Ausgang 42, einrichten können.

Der Hybridantriebsstrang 10 beinhaltet ferner eine elektrische Maschine 44. Die elektrische Maschine 44 ist als Antriebsmaschine zum Bereitstellen von Antriebsleistung ausgebildet.

Der Hybridantriebsstrang 10 ist vorzugsweise zum Einsatz in einem Kraftfahrzeug ausgebildet, insbesondere in einem Personenkraftwagen.

Der Verbrennungsmotor 12 und die elektrische Maschine 44 können in gleichem Maße Antriebsleistung zum Fahren des Kraftfahrzeuges bereitstellen. Die elektrische Maschine 44 ist ferner auch in einem Rekuperationsmodus betreibbar, und zwar als Generator, um eine an die elektrische Maschine 44 angeschlossene Batterie zu laden.

Wie es in Fig. 1 gezeigt ist, ist die elektrische Maschine 44 mit dem ersten Glied 30 des Planetenradsatzes 28 verbunden.

Alternativ hierzu ist es, wie es in Fig. 1 gestrichelt bei 46 angedeutet ist, möglich, die elektrische Maschine 44 mit dem zweiten Glied 32 des Planetenradsatzes anstelle des ersten Gliedes 30 zu verbinden.

Der Hybridantriebsstrang 10 ermöglicht sämtliche relevanten Hybridantriebsmodi, einschließlich eines rein elektrischen Fahrens, eines rein verbrennungsmotorischen Fahrens, eines Boost-Betriebes, bei dem Antriebsleistung von dem Verbrennungsmotor 12 und von der elektrischen Maschine 44 bereitgestellt wird, sowie einen Rekuperationsmodus, einen Modus zum Starten des Verbrennungsmotors 12 mittels der elektrischen Maschine 44, etc.

Der Hybridantriebsstrang 10 ist als Torque-Split-Antriebsstrang realisiert und ermöglicht beispielsweise mehrere, insbesondere vier oder fünf verbrennungsmotorische Gangstufen, bei denen Antriebsleistung ausschließlich von dem Verbrennungsmotor 12 bereitgestellt wird. Ferner ermöglicht der Antriebsstrang vorzugsweise eine, insbesondere jedoch zwei elektromotorische Gangstufen, bei denen Antriebsleistung ausschließlich von der elektrischen Maschine 44 bereitgestellt wird.

Die erste Schaltkupplung 36 ist dazu ausgelegt, das erste Glied 30 und das zweite Glied 32 miteinander zu verblocken, um auf diese Weise beispielsweise Antriebsleistung von der elektrischen Maschine 44 ausschließlich über den Planetenradsatz 28 zu dem Ausgangs 42 zu führen. In gleicher Weise ist hierbei das Übertragen von Leistung von dem Verbrennungsmotor 12 möglich.

Bei geöffneten Schaltkupplungen 38, 40 ist es zudem möglich, durch Schließen beider Reibkupplungen 16, 18 eine eigene Gangstufe einzurichten.

Ferner ist es bei geschlossener erster Schaltkupplung 36 beispielsweise möglich, eine Lastschaltung durchzuführen, bei der Antriebsleistung von der ersten Reibkupplung 16 auf die zweite Reibkupplung 18 übergeben wird (durch überschneidende Betätigung der Reibkupplungen 16, 18), oder umgekehrt, so dass ein derartiger Lastschaltvorgang ohne Zugkraftunterbrechung durchgeführt werden kann, insbesondere bei einem Hochschaltvorgang. Die erste Schaltkupplung 36 bleibt, wie gesagt, hierbei geschlossen.

In den weiteren Figuren sind weitere Ausführungsformen von Hybridantriebssträngen gezeigt, die hinsichtlich Aufbau und Funktionsweise generell dem Hybridantriebsstrang 10 der Fig. 1 entsprechen. Gleiche Elemente sind daher durch gleiche Bezugszeichen gekennzeichnet. Im Folgenden werden im Wesentlichen die Unterschiede erläutert.

Der in Fig. 2 gezeigte Hybridantriebsstrang 10' weist eine Doppelkupplungsanordnung 14 auf, die eine erste Reibkupplung 16 und eine radial hiermit verschachtelte zweite Reibkupplung 18 beinhaltet, die als nasslaufende Reibkupplungen, insbesondere in Form von Lamellenkupplungen, ausgebildet sind. Ein gemeinsames Eingangsglied 20 ist mit einer Kurbelwelle des Verbrennungsmotors 12 verbunden.

Die Getriebeanordnung 26 beinhaltet eine Eingangswellenanordnung 50 mit einer ersten Eingangswelle 52 (Kernwelle) und einer zweiten Eingangswelle 54 (Hohlwelle).

Die erste Eingangswelle 52 ist mit dem Ausgangsglied 22 der ersten Reibkupplung 16 verbunden. Die zweite Eingangswelle 54 ist mit dem Ausgangsglied 24 der zweiten Reibkupplung 18 verbunden.

Ferner beinhaltet die Getriebeanordnung 26 einen Ausgang in Form einer Ausgangswellenanordnung 56. Die Ausgangswellenanordnung 56 beinhaltet eine erste Ausgangswelle 58 und eine zweite Ausgangswelle 60. Die Ausgangswellen 58, 60 sind parallel versetzt zu der Eingangswellenanordnung 50 angeordnet und sind zueinander parallel versetzt ausgerichtet.

An der ersten Ausgangswelle 58 ist ein erstes Abtriebsrad 62 festgelegt. An der zweiten Ausgangswelle 60 ist ein zweites Abtriebsrad 64 festgelegt. Die Abtriebsräder 62, 64 stehen beide in Eingriff mit einem Abtrieb 68 des Hybridantriebsstranges 10', der beispielsweise durch ein Eingangsglied 66 eines Differentialgetriebes gebildet sein kann.

Die Getriebeanordnung 26 beinhaltet einen ersten schaltbaren Radsatz 70, der ein mit der ersten Eingangswelle 52 verbundenes Festrad 72 und ein an der zweiten Ausgangswelle 60 drehbar gelagertes Losrad 74 beinhaltet. Das Losrad 74 des ersten schaltbaren Radsatzes 70 ist mittels der zweiten Schaltkupplung 38 mit der zweiten Ausgangswelle 60 verbindbar.

Ferner weist die Getriebeanordnung 26 einen zweiten schaltbaren Radsatz 76 auf, der ein mit der zweiten Eingangswelle 54 verbundenes Festrad 78 und ein drehbar an der zweiten Ausgangswelle 60 gelagertes Losrad 80 beinhaltet. Das Losrad 80 des zweiten schaltbaren Radsatzes 76 ist mittels der dritten Schaltkupplung 40 mit der zweiten Ausgangswelle 60 verbindbar.

Die zweite Schaltkupplung 38 und die dritte Schaltkupplung 40 sind vorliegend in einem Schaltkupplungspaket vereint, das mittels eines einzelnen Aktuators über eine Schaltmuffe betätigbar ist, derart, dass die zweite Schaltkupplung 38 und die dritte Schaltkupplung 40 alternativ betätigbar sind. Das Schaltkupplungspaket ist in axialer Richtung zwischen den Losrädern 74, 80 angeordnet und in Fig. 2 generell mit 82 bezeichnet. Ferner ist dem Schaltkupplungspaket 82 für die zweite Schaltkupplung 38 die Kurzbezeichnung B1 zugeordnet. Der dritten Schaltkupplung 40 ist die Kurzbezeichnung B2 zugeordnet.

An der ersten Ausgangswelle 58 ist eine Koppelhohlwelle 86 drehbar gelagert.

An der Koppelhohlwelle 86 ist ein Maschinenfestrad 88 festgelegt, das zum einen mit dem Festrad 72 des ersten schaltbaren Radsatzes 70 in Eingriff steht bzw. verbunden ist und das zum anderen mit einem Antriebsritzel 90 der elektrischen Maschine 44 in Eingriff steht bzw. verbunden ist. Die Verbindung zwischen dem Antriebsritzel 90 und dem Maschinenfestrad 88 kann eine direkte Verbindung sein, kann jedoch auch über ein Zwischenzahnrad erfolgen.

Die Getriebeanordnung 26 beinhaltet ferner einen Koppelradsatz 92. Der Koppelradsatz 92 weist ein mit der zweiten Eingangswelle 54 verbundenes Festrad 94 auf. Ferner weist der Koppelradsatz 92 ein drehbar an der Koppelhohlwelle 86 gelagertes Losrad 96 auf.

Koaxial zu der ersten Ausgangswelle 58 ist ferner der Planetenradsatz 28 angeordnet. Der Planetenträger 34 des Planetenradsatzes 28 ist mit der ersten Ausgangswelle 58 verbunden, und zwar benachbart zu dem ersten Abtriebsrad 62.

Ferner ist das Sonnenrad 30 des Planetenradsatzes 28 mit der Koppelhohlwelle 86 verbunden. Das Losrad 96 des Koppelradsatzes 92 ist mit dem Hohlrad 32 verbunden.

Der Planetenradsatz 28 ist in axialer Richtung zwischen dem ersten Abtriebsrad 62 und dem Losrad 96 des Koppelradsatzes 92 angeordnet.

Die erste Schaltkupplung 36 ist an der Koppelhohlwelle 86 angeordnet und ist dazu ausgelegt, das Losrad 96 des Koppelradsatzes 92 mit der Koppelhohlwelle 86 zu verbinden. Das Losrad 96 des Koppelradsatzes 92 ist in axialer Richtung zwischen dem Planetenradsatz 28 und der ersten Schaltkupplung 36 angeordnet. Die erste Schaltkupplung 36 ist in axialer Richtung zwischen dem Losrad 96 des Koppelradsatzes 92 und dem Maschinenfestrad 88 angeordnet.

An der ersten Ausgangswelle 58 sind, ausgehend von einem Eingang der Getriebeanordnung 26, d.h. ausgehend von der Doppelkupplungsanordnung 14, folgende Glieder angeordnet: erstes Abtriebsrad 62, Planetenradsatz 28, erste Schaltkupplung 36, Maschinenfestrad 88.

In entsprechender Weise sind an der zweiten Ausgangswelle ausgehend von dem Getriebeeingang folgende Glieder angeordnet: zweites Abtriebsrad 64, ein Parksperrenrad 98 zur Immobilisierung des Antriebsstranges 10', das Losrad 80 des zweiten schaltbaren Radsatzes, das Schaltkupplungspakets 82, das Losrad 74 des ersten schaltbaren Radsatzes 70.

An der Eingangswellenanordnung 50 sind, ausgehend von dem Getriebeeingang folgende Glieder angeordnet: Festrad 94 des Koppelradsatzes, Festrad 78 des zweiten schaltbaren Radsatzes 76, Festrad 72 des ersten schaltbaren Radsatzes 70.

Eine Längsachse der elektrischen Maschine 44 ist vorzugsweise parallel zu der Eingangswellenanordnung 50 bzw. der Ausgangswellenanordnung 56 angeordnet. Die elektrische Maschine 44 ist vorzugsweise in axialer Richtung überschneidend mit der Getriebeanordnung 26 angeordnet. Die elektrische Maschine 44 erstreckt sich vorzugsweise in axialer Richtung zwischen der Doppelkupplungsanordnung 14 und der vom Getriebeeingang ausgehen letzten Zahnradebene der Getriebeanordnung 26, wobei die letzte Zahnradebene vorliegend gebildet ist durch den ersten schaltbaren Radsatz 70 sowie das Maschinenfestrad 88 und das Antriebsritzel 90.

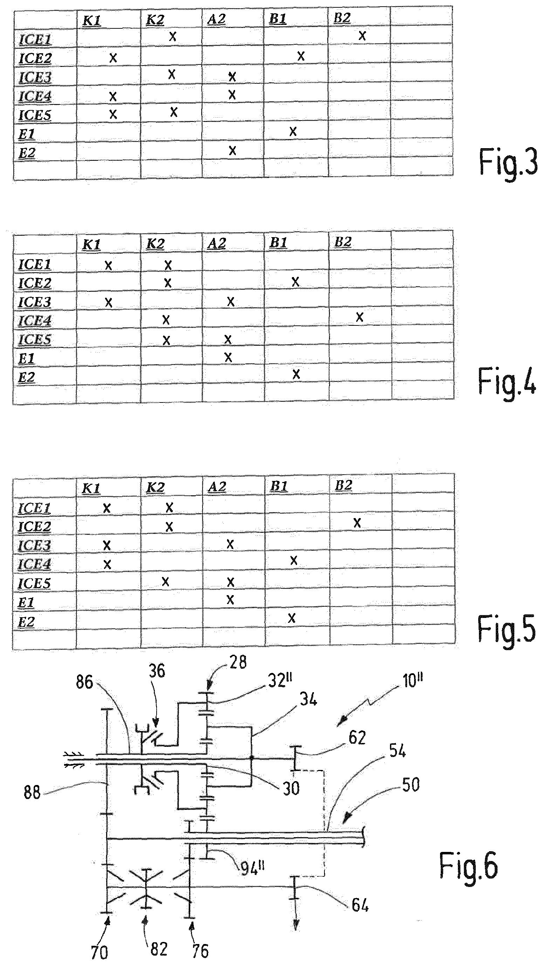

Mit dem Hybridantriebsstrang 10' lassen sich, je nach Konfiguration der Radsätze und Übersetzungen beispielhaft Gangstufen und Betriebsweisen realisieren, wie sie in den Fig. 3 bis 5 dargestellt sind.

In Fig. 3 ist eine erste Variante dargestellt, bei der mittels des Hybridantriebsstranges 10' fünf verbrennungsmotorische Vorwärtsgangstufen ICE1 bis ICE5 einrichtbar sind, sowie zwei elektromotorische Vorwärtsgangstufen E1, E2, die jeweils auch als Rückwärtsgangstufen (bei umgekehrter Drehrichtung der elektrischen Maschine 44) wirken können. Eine verbrennungsmotorische Rückwärtsgangstufe ist mittels des Hybridantriebsstranges 10' nicht einrichtbar.

In allen verbrennungsmotorischen Gangstufen ICE kann zusätzliche elektromotorische Antriebsleistung nach der Art eines Boost-Betriebes bereitgestellt werden.

In der ersten verbrennungsmotorischen Gangstufe ICE1 sind die zweite Reibkupplung 18 (K2) und die dritte Schaltkupplung (B2) geschlossen. Hierbei fließt Antriebsleistung von dem Verbrennungsmotor 12 ausschließlich über den zweiten schaltbaren Radsatz 76 und die zweite Ausgangswelle 60 zum Abtrieb 68.

Die zweite verbrennungsmotorische Vorwärtsgangstufe ICE2 wird eingerichtet durch Schließen der ersten Reibkupplung 16 (K1) und der zweiten Schaltkupplung (B1). Hierbei fließt Leistung ausschließlich über den ersten schaltbaren Radsatz 70 und die zweite Ausgangswelle 60 hin zu dem Abtrieb 68.

Zum Einrichten der dritten verbrennungsmotorischen Vorwärtsgangstufe wird die zweite Reibkupplung 18 geschlossen, sowie die erste Schaltkupplung 36 (A2).

Leistung fließt auf diese Weise von der zweiten Eingangswelle 52 über den Koppelradsatz 92 und den verblockten Planetenradsatz 28 hin zu dem ersten Abtriebsrad 62 und von dort zu dem Abtrieb 68.

Eine vierte verbrennungsmotorische Vorwärtsgangstufe wird eingelegt durch Schließen der ersten Reibkupplung 16 und durch Schließen der ersten Schaltkupplung 36 (A2). Hierbei fließt Leistung von der ersten Eingangswelle 52 über das Maschinenfestrad 88 und die Koppelhohlwelle 86 bei verblocktem Planetenradsatz 28 hin zu dem ersten Abtriebsrad 62, und von dort zu dem Abtrieb 68.

Gangwechsel zwischen den Vorwärtsgangstufen ICE3 und ICE4 können unter Last durchgeführt werden. Hierbei bleibt die erste Schaltkupplung 36 geschlossen und die erste Reibkupplung 16 und die zweite Reibkupplung 18 können in überschneidender Art und Weise betätigt werden, wie es bei Doppelkupplungsgetrieben an sich bekannt ist, um zugkraftunterbrechungsfreie Schaltungen durchzuführen.

Eine fünfte verbrennungsmotorische Vorwärtsgangstufe kann eingerichtet werden durch Schließen beider Reibkupplungen 16, 18. Die Schaltkupplungen 36, 40, 38 (A2, B1, B2) bleiben in diesem Fall geöffnet. Durch das Schließen der Reibkupplungen 16, 18 werden das Sonnenrad 30 und das Hohlrad 32 gleichermaßen mit Leistung von dem Verbrennungsmotor 12 angetrieben, um auf diese Weise Leistung ausschließlich über den Planetenradsatz 28, der auf diese Art und Weise verblockt ist, hin zu dem ersten Abtriebsrad 62 und von dort zu dem Abtrieb 68 zu übertragen.

Eine erste elektromotorische Vorwärtsgangstufe E1, bei der Leistung ausschließlich von der elektrischen Maschine 44 bereitgestellt wird, kann eingerichtet werden durch Schließen der zweiten Schaltkupplung 38 (B1). Hierbei fließt Leistung von dem Antriebsritzel 90 über das Maschinenfestrad 88, das Festrad 72 und das Losrad 74 hin zu der zweiten Ausgangswelle 60 und von dort über das zweite Abtriebsrad 64 hin zu dem Abtrieb 68.

Eine zweite elektromotorische Vorwärtsgangstufe E2 kann eingerichtet werden, indem ausschließlich die erste Schaltkupplung 36 (A2) geschlossen wird. Hierbei fließt Antriebsleistung von dem Antriebsritzel 90 über das Maschinenfestrad 88 und die Koppelhohlwelle 86 über den verblockten Planetenradsatz 28 hin zu dem ersten Abtriebsrad 62, und von dort zu dem Abtrieb 68.

Alternative Ausführungsformen, bei denen der Antriebsstrang 10' der Fig. 2 unterschiedliche verbrennungsmotorische Vorwärtsgangstufen ICE1 bis ICE5 sowie elektromotorische Vorwärtsgangstufen E1, E2 einrichten kann, sind in den Fig. 4 und 5 dargestellt.

In Fig. 4 ist gezeigt, dass eine erste verbrennungsmotorische Gangstufe ICE1 durch Schließen der zwei Reibkupplungen 16, 18 eingerichtet werden kann, wobei die Schaltkupplungen 36, 38, 40 offen bleiben.

Die übrigen Gangstufen ergeben sich aus dem Diagramm der Fig. 4 sowie der Fig. 2.

In entsprechender Weise kann eine dritte Variante zum Einrichten von Gangstufen des Hybridantriebsstranges 10' realisiert werden, wie es in Fig. 5 dargestellt ist. Die Variante der Fig. 5 unterscheidet sich von jener der Fig. 4 im Wesentlichen dadurch, dass die zweite und die vierte Vorwärtsgangstufe ICE2, ICE4 miteinander vertauscht sind.

In den nachfolgenden Figuren sind weitere Ausführungsformen von Hybridantriebssträngen dargestellt, die hinsichtlich Aufbau und Funktionsweise generell dem Hybridantriebsstrang 10' der Fig. 2 entsprechen. Gleiche Elemente sind daher durch gleiche Bezugszeichen gekennzeichnet. Im Folgenden werden im Wesentlichen die Unterschiede erläutert.

Bei dem nicht erfindungsgemäßen Hybridantriebsstrang 10" der Fig. 6 erfolgt eine Verbindung zwischen der zweiten Eingangswelle 54 und dem Planetenradsatz auf folgende Art und Weise. An der zweiten Eingangswelle 54 ist ein Festrad 92" festgelegt, das direkt mit einer Außenverzahnung des Hohlrades 32" des Planetenradsatzes 28 in Eingriff steht. Auf diese Art und Weise kann eine axial kompakte Bauweise realisiert werden. Die erste Schaltkupplung 36 ist in diesem Fall direkt axial zwischen dem Planetenradsatz 28 und dem Maschinenfestrad 88 angeordnet. Die erste Schaltkupplung 36 ist vorliegenden Fall dazu ausgebildet, das Hohlrad 32" bedarfsweise mit der Koppelhohlwelle 86 zu verbinden.

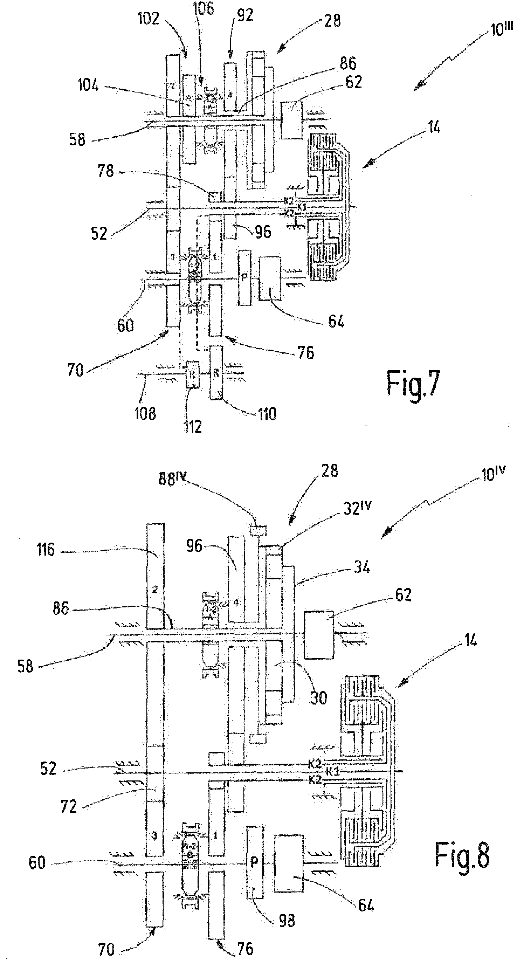

In Fig. 7 ist ein Antriebsstrang 10" dargestellt, der sich von dem Antriebsstrang 10' der Fig. 2 im Wesentlichen dadurch unterscheidet, dass zusätzlich zu einem elektromotorischen Rückwärtsfahrbetrieb auch ein verbrennungsmotorischer Rückwärtsfahrbetrieb möglich ist. Zu diesem Zweck ist eine Rückwärtsganganordnung 102 vorgesehen, die ein Rückwärtsgang-Losrad 104 aufweist, das drehbar an der Koppelhohlwelle gelagert ist und mittels einer Rückwärtsgang-Schaltkupplung 106 (A1) mit der Koppelhohlwelle 86 verbindbar ist. Die Rückwärtsgang-Schaltkupplung 106 und die erste Schaltkupplung 38 sind hierbei vorzugsweise in Schaltkupplungspaket integriert.

Die Rückwärtsgangs-Anordnung 102 beinhaltet ferner eine Umkehrwelle 108 sowie ein erstes Rückwärtsgang-Festrad 110, das mit dem Festrad 78 des zweiten schaltbaren Radsatzes 76 in Eingriff steht bzw. verbunden ist. Ferner ist an der Umkehrwelle 108 ein zweites Rückwärtsgang-Festrad 112 festgelegt, das in Eingriff steht mit dem Rückwärtsgang-Losrad 104.

Zum Einrichten einer verbrennungsmotorischen Rückwärtsgangstufe wird die zweite Reibkupplung K2 geschlossen und Antriebsleistung fließt von dem Festrad 78 über das erste Rückwärtsgang-Festrad 110, die Umkehrwelle 108, das zweite Rückwärtsgang-Festrad 112 und das Rückwärtsgang-Losrad 104 bei geschlossener Rückwärtsgang-Schaltkupplung 106 in die Koppelhohlwelle 86, und von dort ins Sonnenrad des Planetenradsatzes 28, und ferner von dem Festrad 96 in das Hohlrad des Planetenradsatzes 28.

In Fig. 8 ist eine weitere Ausführungsform eines Hybridantriebsstranges 10^{IV} gezeigt. Diese entspricht wiederum hinsichtlich Aufbau und Funktionsweise dem Hybridantriebsstrang 10' der Fig. 2. Dabei ist die elektrische Maschine 44 über ein Maschinenfestrad 88 an den Antriebsstrang 10^{IV} angebunden, das drehfest mit dem zweiten Glied 32^{IV} des Planetenradsatzes 28 verbunden ist, und drehfest mit dem Losrad 96 des Koppelradsatzes.

Das Festrad 72 des ersten schaltbaren Radsatzes 70 steht hierbei in Eingriff mit einem Festrad 116, das an der Koppelhohlwelle 86 festgelegt ist und das nicht mit der elektrischen Maschine 44 in Eingriff steht.

## Patentansprüche

1. Hybridantriebsstrang (10) für ein Kraftfahrzeug, mit einer eine erste Reibkupplung (16) und eine zweite Reibkupplung (18) beinhaltenden Doppelkupplungsanordnung (14), die ein Eingangsglied (20) aufweist, das mit einem Verbrennungsmotor (12) verbindbar ist, und mit einer Getriebeanordnung (26), die eine Eingangswellenanordnung (50) beinhaltet, die eine mit einem ersten Ausgangsglied (22) der Doppelkupplungsanordnung (14) verbundene erste Eingangswelle (52) und eine mit einem zweiten Ausgangsglied (24) der Doppelkupplungsanordnung (14) verbundene zweite Eingangswelle (54) aufweist, wobei die Eingangswellenanordnung (50) über eine Mehrzahl von schaltbaren Radsätzen (70, 76) mit einer Ausgangswellenanordnung (56) verbindbar ist, wobei an einer ersten Ausgangswelle (58) der Ausgangswellenanordnung (56) eine Koppelhohlwelle (86) gelagert ist, die mit einer elektrischen Maschine (44) verbunden oder verbindbar ist, wobei die erste Eingangswelle (52) über einen Konstanten-Radsatz (72, 88) mit der Koppelhohlwelle (86) verbunden ist, wobei koaxial zu der ersten Ausgangswelle (58) ein Planetenradsatz (28) mit drei Gliedern (30, 32, 34) angeordnet ist, wobei ein erstes Glied (30) des Planetenradsatzes (28) mit der Koppelhohlwelle (86) verbunden ist, wobei das erste Glied (30) und ein zweites Glied (32) des Planetenradsatzes (28) mittels einer ersten Schaltkupplung (36) miteinander verbindbar sind und das zweite Glied (32) des Planetenradsatzes (28) mit der zweiten Eingangswelle (54) verbunden ist, **dadurch gekennzeichnet, dass** die zweite Eingangswelle (54) über einen Koppelradsatz (92) mit der Koppelhohlwelle (86) verbindbar ist, wobei der Koppelradsatz (92) in axialer Richtung zwischen der ersten Schaltkupplung (36) und dem Planetenradsatz (28) angeordnet ist.

2. Hybridantriebsstrang nach Anspruch 1, **dadurch gekennzeichnet, dass** ein drittes Glied (34) des Planetenradsatzes (28) mit der Ausgangswellenanordnung (56) verbunden ist.

3. Hybridantriebsstrang nach einem der Ansprüche 1 bis 2, **dadurch gekennzeichnet, dass** die elektrische Maschine (44) mit dem ersten Glied (30) des Planetenradsatzes (28) verbunden ist oder dass die elektrische Maschine (44) mit dem zweiten Glied (32) des Planetenradsatzes (28) verbunden ist oder dass die elektrische Maschine (44) mit dem Koppelradsatz (92) verbunden ist.

4. Hybridantriebsstrang nach einem der Ansprüche 1 bis 3, **dadurch gekennzeichnet, dass** die erste Eingangswelle (52) mittels eines ersten schaltbaren Radsatzes (70) mit einer zweiten Ausgangswelle (60) der Ausgangswellenanordnung (56) verbindbar ist.

5. Hybridantriebsstrang nach einem der Ansprüche 1 bis 4, **dadurch gekennzeichnet, dass** die zweite Eingangswelle (54) mittels eines zweiten schaltbaren Radsatzes (76) mit einer zweiten Ausgangswelle (60) der Ausgangswellenanordnung (56) verbindbar ist.

6. Hybridantriebsstrang nach Anspruch 4 und nach Anspruch 5, **dadurch gekennzeichnet, dass** zwischen dem ersten schaltbaren Radsatz (70) und dem zweiten schaltbaren Radsatz (76) ein Schaltkupplungspaket (82) angeordnet ist, mittels dessen alternativ der erste schaltbare Radsatz (70) oder der zweite schaltbare Radsatz (76) in den Leistungsfluss schaltbar ist.

7. Hybridantriebsstrang nach einem der Ansprüche 1 bis 6, **dadurch gekennzeichnet, dass** die zweite Eingangswelle (54) über den Koppelradsatz (92) mit dem zweiten Glied (32) des Planetenradsatzes (28) verbunden ist.

8. Hybridantriebsstrang nach Anspruch 6 oder 7, **dadurch gekennzeichnet, dass** ein Losrad (96) des Koppelradsatzes (92) in axialer Richtung benachbart zu dem Planetenradsatz (28) angeordnet ist.

## Claims

1. Hybrid drive train (10) for a motor vehicle, comprising a dual clutch arrangement (14), which contains a first friction clutch (16) and a second friction clutch (18) and which has an input element (20) that can be connected to an internal combustion engine (12), and comprising a transmission arrangement (26), which contains an input shaft arrangement (50) that has a first input shaft (52) connected to a first output element (22) of the dual clutch arrangement (14) and a second input shaft (54) connected to a second output element (24) of the dual clutch arrangement (14), wherein the input shaft arrangement (50) can be connected to an output shaft arrangement (56) via a plurality of switchable gear sets (70, 76), wherein a coupling hollow shaft (86), which is connected or can be connected to an electric machine (44), is mounted on a first output shaft (58) of the output shaft arrangement (56), wherein the first input shaft (52) is connected to the coupling hollow shaft (86) via a constant gear set (72, 88), wherein a planetary gear set (28) with three elements (30, 32, 34) is arranged coaxially with respect to the first output shaft (58), wherein a first element (30) of the planetary gear set (28) is connected to the coupling hollow shaft (86), wherein the first element (30) and a second element (32) of the planetary gear set (28) can be connected to one another by means of a first shifting clutch (36) and the second element (32) of the planetary gear set (28) is connected to the second input shaft (54), **characterized in that** the second input shaft (54) can be connected to the coupling hollow shaft (86) via a coupling gear set (92), wherein the coupling gear set (92) is arranged between the first shifting clutch (36) and the planetary gear set (28) in the axial direction.

2. Hybrid drive train according to Claim 1, **characterized in that** a third element (34) of the planetary gear set (28) is connected to the output shaft arrangement (56).

3. Hybrid drive train according to either of Claims 1 and 2, **characterized in that** the electric machine (44) is connected to the first element (30) of the planetary gear set (28), or **in that** the electric machine (44) is connected to the second element (32) of the planetary gear set (28), or **in that** the electric machine (44) is connected to the coupling gear set (92).

4. Hybrid drive train according to one of Claims 1 to 3, **characterized in that** the first input shaft (52) can be connected to a second output shaft (60) of the output shaft arrangement (56) by means of a first shiftable gear set (70).

5. Hybrid drive train according to one of Claims 1 to 4, **characterized in that** the second input shaft (54) can be connected to a second output shaft (60) of the output shaft arrangement (56) by means of a second shiftable gear set (76).

6. Hybrid drive train according to Claim 4 and according to Claim 5, **characterized in that** a shifting clutch pack (82) is arranged between the first shiftable gear set (70) and the second shiftable gear set (76), it being possible to connect the first shiftable gear set (70) or the second shiftable gear set (76) into the power flow by means of said shifting clutch pack as an alternative.

7. Hybrid drive train according to one of Claims 1 to 6, **characterized in that** the second input shaft (54) is connected to the second element (32) of the planetary gear set (28) via the coupling gear set (92).

8. Hybrid drive train according to Claim 6 or 7, **characterized in that** an idler gear (96) of the coupling gear set (92) is arranged adjacent to the planetary gear set (28) in the axial direction.

## Revendications

1. Chaîne cinématique hybride (10) pour un véhicule automobile, comprenant un ensemble d'embrayage double (14) comportant un premier embrayage à friction (16) et un deuxième embrayage à friction (18) qui présente un élément d'entrée (20) qui peut être relié à un moteur à combustion interne (12), et un ensemble de transmission (26) qui comporte un ensemble d'arbres d'entrée (50) qui présente un premier arbre d'entrée (52) relié à un premier élément de sortie (22) de l'ensemble d'embrayage double (14) et un deuxième arbre d'entrée (54) relié à un deuxième élément de sortie (24) de l'ensemble d'embrayage double (14), dans laquelle l'ensemble d'arbres d'entrée (50) peut être relié à un ensemble d'arbres de sortie (56) par l'intermédiaire d'une pluralité de jeux de pignons commutables (70, 76), dans laquelle, au niveau d'un premier arbre de sortie (58) de l'ensemble d'arbres de sortie (56) est monté un arbre creux d'accouplement (86) qui est relié ou peut être relié à une machine électrique (44), dans laquelle le premier arbre d'entrée (52) est relié à l'arbre creux d'accouplement (86) par l'intermédiaire d'un jeu de pignons à prise constante (72, 88), dans laquelle un jeu de pignons planétaires (28) à trois éléments (30, 32, 34) est disposé coaxialement au premier arbre de sortie (58), dans laquelle un premier élément (30) du jeu de pignons planétaires (28) est relié à l'arbre creux d'accouplement (86), dans laquelle le premier élément (30) et un deuxième élément (32) du jeu de pignons planétaires (28) peuvent être reliés ensemble au moyen d'un premier embrayage (36), et le deuxième élément (32) du jeu de pignons planétaires (28) est relié au deuxième arbre d'entrée (54), **caractérisée en ce que** le deuxième arbre d'entrée (54) peut être relié à l'arbre creux d'accouplement (86) par l'intermédiaire d'un jeu de pignons d'accouplement (92), le jeu de pignons d'accouplement (92) étant disposé entre le premier embrayage (36) et le jeu de pignons planétaires (28) dans la direction axiale.

2. Chaîne cinématique hybride selon la revendication 1, **caractérisée en ce qu'**un troisième élément (34) du jeu de pignons planétaires (28) est relié à l'ensemble d'arbres de sortie (56).

3. Chaîne cinématique hybride selon l'une quelconque des revendications 1 à 2, **caractérisée en ce que** la machine électrique (44) est reliée au premier élément (30) du jeu de pignons planétaires (28), ou **en ce que** la machine électrique (44) est reliée au deuxième élément (32) du jeu de pignons planétaires (28), ou **en ce que** la machine électrique (44) est reliée au jeu de pignons d'accouplement (92).

4. Chaîne cinématique hybride selon l'une quelconque des revendications 1 à 3, **caractérisée en ce que** le premier arbre d'entrée (52) peut être relié au moyen d'un premier jeu de pignons commutables (70) à un deuxième arbre de sortie (60) de l'ensemble d'arbres de sortie (56).

5. Chaîne cinématique hybride selon l'une quelconque des revendications 1 à 4, **caractérisée en ce que** le deuxième arbre d'entrée (54) peut être relié au moyen d'un deuxième jeu de pignons commutables (76) à un deuxième arbre de sortie (60) de l'ensemble d'arbres de sortie (56).

6. Chaîne cinématique hybride selon la revendication 4 et selon la revendication 5, **caractérisée en ce qu'**entre le premier jeu de pignons commutables (70) et le deuxième jeu de pignons commutables (76) est disposé un pack d'embrayage (82) au moyen duquel le premier jeu de pignons commutables (70) ou le deuxième jeu de pignons commutables (76) peut être inséré dans le flux de puissance en alternance.

7. Chaîne cinématique hybride selon l'une quelconque des revendications 1 à 6, **caractérisée en ce que** le deuxième arbre d'entrée (54) est relié au deuxième élément (32) du jeu de pignons planétaires (28) par l'intermédiaire de l'ensemble de pignons d'accouplement (92).

8. Chaîne cinématique hybride selon la revendication 6 ou 7, **caractérisée en ce qu'**un pignon fou (96) du jeu de pignons d'accouplement (92) est disposé de manière adjacente au jeu de pignons planétaires (28) dans la direction axiale.
